# EUROPEAN PATENT APPLICATION

(11) **EP 2 050 942 A2**
(43) Date of publication of application: **22.04.2009**
(21) Application number: 08016798.4
(22) Date of filing: 24.09.2008
(51) Int. Cl.: F02B 67/10, F02B 37/00

(54) **Turbocharger mounting system**

(30) Priority: 16.10.2007 US 873057
(71) Applicant: International Engine Intellectual Property Company, LLC., Warrenville, IL 60555 (US)
(72) Inventor: Anello, Anthony, M., Bartlett IL 60103 (US)
(74) Representative: Kuhnen, Rainer K.

(57) **Abstract**

A mounting system (100) for a turbocharger (106. 108) in an internal combustion engine includes a support base (110) having a top surface (134) configured for receiving the turbocharger and a recessed bearing surface (150) disposed on the turbocharger. The mounting system (100) also includes at least one bridging clamp (112) connected to the support base (110). The bridging clamp (112) includes a flange (120) having at least one wing (130, 132) that bears down on the bearing surface (150) of the turbocharger (106, 108).

## Description

### FIELD OF THE INVENTION

This invention generally relates to turbochargers used in internal combustion engines. More particularly, this invention relates to turbochargers mechanically mounted on internal combustion engines.

### BACKGROUND OF THE INVENTION

Internal combustion, engines convert chemical energy from a fuel into mechanical energy. The fuel can be petroleum-based, natural gas, another combustible material, or a combination thereof. Most internal combustion engines inject an air-fuel mixture into one or more cylinders. The fuel ignites to generate rapidly expanding gases that actuate a piston in the cylinder. The fuel can be ignited by compression such as in a diesel engine or through some type of spark such as the spark plug in a gasoline engine. The piston usually is connected to a crankshaft or similar device for converting the reciprocating motion of the piston into rotational motion. The rotational motion from the crankshaft can be used to propel a vehicle, operate a pump or an electrical generator, or perform other work. A vehicle can be a truck, an automobile, a boat, or the like.

Many internal combustion engines have a turbocharger to pressurize or boost the amount of air flowing into the cylinders. The additional air in a cylinder permits the combustion of additional fuel in the cylinder. The combustion of additional fuel increases the power generated by the engine. Generally, an internal combustion engine produces more power with a turbocharger than without a turbocharger.

Most turbochargers have a turbine connected to a compressor. The turbine usually has a turbine wheel positioned to spin inside a turbine housing. The compressor usually has a compressor wheel positioned to spin inside a compressor housing. The turbine wheel usually is connected to the compressor wheel via a common shaft. The turbocharger typically is mounted near the exhaust manifold of the engine. The exhaust gases from the engine pass through the turbine housing. The exhaust gases cause the turbine wheel to spin, thus causing the compressor wheel to spin. The spinning compressor wheel pressurizes the intake air flowing through the compressor housing to the cylinders in the engine.

Turbochargers typically operate in response to the engine operation. Generally, a turbocharger spins faster when the engine produces more exhaust gases and spins slower when the engine produces less exhaust gases. If the turbocharger operates too fast, the turbocharger output can reduce engine performance and can damage the turbocharger and other engine components. If the turbocharger operates too slow, the engine can hesitate, loose power, or otherwise operate inefficiently. The turbocharger efficiency also can be affected by changes in atmospheric pressure, ambient temperature, and engine speed.

Turbochargers can have various configurations to control the output from the turbocharger. Many turbocharger configurations can have a wastegate or a valve to allow exhaust gases to bypass the turbine. Other turbocharger configurations can use a turbine with a variable geometry, where a vane or nozzle inside the turbine housing moves to increase or decrease the exhaust gas flow across the turbine wheel. Some turbocharger configurations can have two compressors connected via a common shaft to the turbine. Yet other turbocharger configurations can have two turbochargers.

Dual turbochargers usually have a first turbocharger and a second turbocharger that are connected to receive exhaust gases and to pressurize the intake air flowing to the cylinders. The first turbocharger usually operates during a range of intake air pressures. The second turbocharger usually operates during another range of air intake pressures. The first turbocharger can operate during lower intake air pressures. The second turbocharger can operate at higher intake air pressures. The first turbocharger can operate at substantially all intake air pressures, while the second turbocharger can operate at higher intake air pressures. The first and second turbochargers can operate at the same or different times, and can operate together during a transition time when the second turbocharger is activated.

Many turbochargers are mounted on an internal combustion engine by bolts or similar mounting mechanism. The bolts typically pass through holes in a turbocharger base or flange and screw into holes in the internal combustion engine. The connection between the turbocharger base and the internal combustion engine can be mismatched, such as when the turbocharger base and engine are uneven, when the holes on the turbocharger base do not align with the holes in the engine, and the like. The turbocharger can be mounted on the engine when the turbocharger base and engine are mismatched, however the mismatched connection can create mechanical or installed stresses in the turbocharger and mounting mechanism.

In addition, the hot exhaust gases can cause thermal stresses during operation of the turbocharger. The exhaust gases can raise the temperature of the turbocharger up to about 1500 degrees Fahrenheit (815 degrees Celsius), or higher. The temperature increase causes thermal expansion of the turbocharger. The temperature decreases when the turbocharger stops operating, which causes thermal contraction of the turbocharger. Thus, the thermal expansion and contraction creates thermal stresses within the turbocharger.

These installed and thermal stresses can cause cracking, fatigue, fracture, or other failure of the turbocharger structure. The installed and thermal stresses can increase shear forces or side loads on the mounting bolts or mounting mechanism. The thermal and installed stresses can be more pronounced in dual turbochargers, larger turbochargers such as turbochargers used in diesel engines, and in other turbochargers with a larger or longer connection area with the engine. The size and type of connection area can increase the effect of thermal stresses and can increase the potential for mismatch of the turbocharger with the engine.

Some dual turbochargers have a single-mounting mechanism, where a supporting turbocharger is mounted on the internal combustion engine. The second turbocharger is mounted directly to the supporting turbocharger and not on the internal combustion engine. The supporting and second turbochargers can be difficult or awkward to install as a unit and can increase the engine assembly time if installed separately. The uneven support of a single-mounting mechanism can increase the maintenance of the turbocharger. In addition, the geometry of a single-mounted dual-turbocharger assembly is often not rigid enough to adequately support both turbochargers against engine and turbocharger vibration energy. The noise vibration and harshness can be transmitted to the vehicle and operator.

U.S. Patent No. 7,043,915 to Applicant, and under common ownership to International Truck and Engine Intellectual Property, is specifically incorporated by reference herein. U.S. Patent No. 7,043,915 discloses a turbocharger mounting system that pivotally mounts a turbocharger on an internal combustion engine. The turbocharger mounting system has a turbocharger unit connected to a mounting mechanism having multiple clamping devices mounted on a support base. The turbocharger has a fixed connection with a first flange, which limits the horizontal movement of the first flange. The turbocharger also has a floating connection with a second flange, which permits the horizontal movement of the second flange. While the mounting system of U.S. Patent No. 7,043,915 addresses the aforementioned problems, there is a need for a simplified, less costly mounting system.

### SUMMARY OF THE INVENTION

A mounting system for a turbocharger in an internal combustion engine includes a support base having a top surface configured for receiving the turbocharger and a recessed bearing surface disposed on the turbocharger. The mounting system also includes at least one bridging clamp connected to the support base. The bridging clamp includes a flange having at least one wing that bears down on the bearing surface of the turbocharger.

### BRIEF DESCRIPTION OF THE DRAWINGS

FIG. 1 is top view of a turbocharger mounting system.

FIG. 2 is a side section view of the turbocharger mounting system in accordance with the invention.

FIG. 3 is a perspective view of the turbocharger mounting system in accordance with the invention.

### DESCRIPTION OF A PREFERRED EMBODIMENT

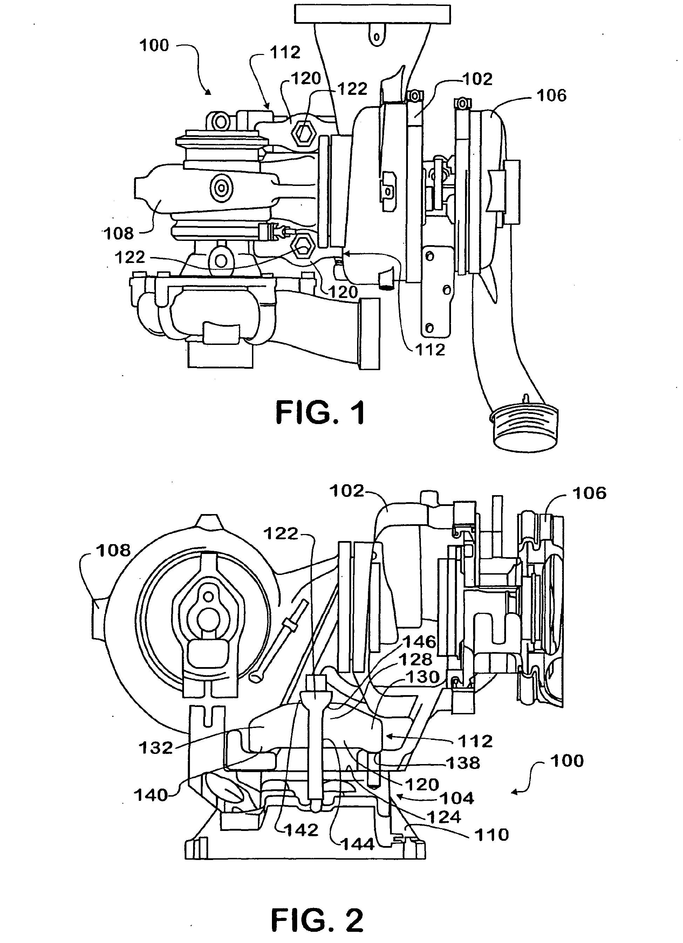

Referring to FIGs. 1 and 2, a turbocharger mounting system for an internal combustion engine is indicated generally at 100. The turbocharger mounting system 100 has a turbocharger unit 102 connected to a mounting mechanism 104. The turbocharger unit 102 is a dual turbocharger, having a first turbocharger 106 and a second turbocharger 108, however other configurations of dual turbocharger units are contemplated. Additionally, the turbocharger unit 102 can have other configurations such as a single turbocharger, a variable geometry turbocharger, and the like. In the turbocharger mounting system 100, the first turbocharger 106 can operate during high intake air pressures, and the second turbocharger 108 can operate during low intake air pressures.

The mounting mechanism 104 is connected to the internal combustion engine, such as with bolts, and is configured to mount the first turbocharger 106 and the second turbocharger 108 on the internal combustion engine with a degree of pivot after assembly. While a particular configuration of turbocharger mounting system 100 will be shown and described, the mounting system can have other configurations, including those with additional components.

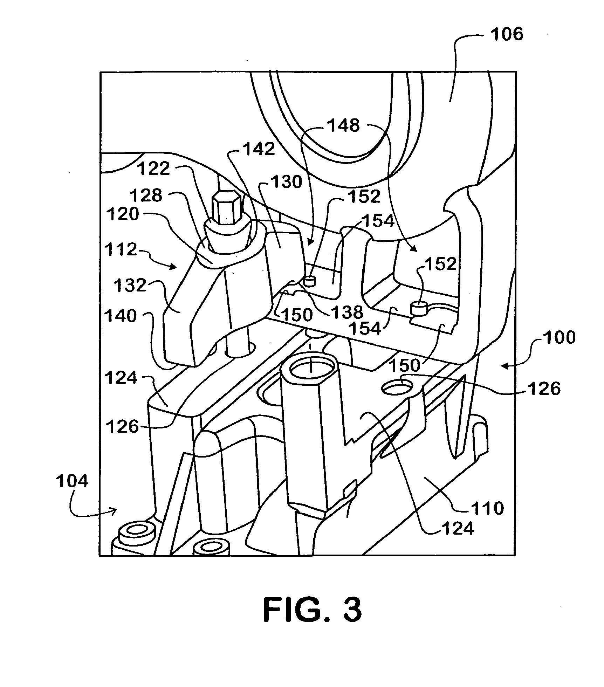

Referring now to FIGs. 1-3, the mounting mechanism 104 has a support base 110 connected to two bridging clamps 112. Bridging clamps 112 include a turbocharger flange 120 and a spherical bolt 122, which attach the bridging clamps 112 to the support base 110. The bridging clamps 112 each connect the first and the second turbochargers 106, 108 to the support base 110.

Advantageously, the support base 110 is made from cast nodular iron or like material, and is integrated with or formed by another engine component, such as a cylinder head or fuel pump cavity. Alternatively, the support base 110 can be mounted on the internal combustion engine or in the engine compartment of a vehicle.

The support base 110 has a top surface 124 that is substantially flat and configured for receiving the bottom surface of the first and second turbochargers 106, 108. At the top surface 124, two fastener holes 126 are configured to receive the spherical bolts 122.

Flange 120 is generally elongate, having a central portion 128 that is generally cylindrical, and first and second wings 130, 132 extending from the central portion that are 180-degress apart from each other. The flange 120 is generally symmetric about the central portion 128 and in a plane tangential to the wings 130, 132.

Advantageously, the height of the flange 120 is at a maximum at the central portion 128, and the height of the flange generally decreases towards tips of the wings 130, 132. Additionally, the maximum width of the flange 120 is at the central portion 128, and the width of the wings 130, 132 are substantially constant over the length of the wings. At the tips of the wings 130, 132, turbocharger contact surfaces 138, 140 are disposed on the lower side of the flange. The turbocharger contact surfaces 138, 140 are the point of contact of the bridging clamp 112 on the turbochargers 106, 108, respectively.

At the central portion 128 of the flange 120 is a fastener hole 142 configured for receiving the spherical bolt 122. The fastener hole 142 includes a cylindrical portion 144 and a spherical contact portion 146. The spherical contact portion 146 is disposed at the top surface of the flange 120 and is configured to contact the spherical bolt 122. The configuration of the spherical contact portion 146 with the spherical bolt 122 permits the rotation of the flange 120 with respect to the bolt 122, but prevents the upwards displacement of the flange with respect to the bolt beyond the point where the spherical contact portion is engaged against the spherical bolt (i.e. maintains a clamping force).

The mounting mechanism 104 also includes a first location mechanism 148 disposed on the first turbocharger 106, and a second location mechanism (not shown) disposed on the second turbocharger 108, where the second location mechanism is the mirror image of the first location mechanism. In the turbocharger mounting system 100, the location mechanism 148 includes recessed bearing surfaces 150 and alignment pins 152 that are located on each turbocharger 106, 108 at a clamping platform 154.

The recessed bearing surface 150 is sized and arranged to receive the turbocharger contact surface 138, 140 of the flange 120. The bridging clamp 112 clamps the tips of the flange 120 down into the recess bearing surface 150. Further, the recessed bearing surface 150 is dimensioned to be slightly wider than the width of the flange 120 at the turbocharger contact surface 138, 140 to accommodate part-to-part tolerance stack-up and mismatches, and also to allow a degree of pivot of the flange within the recess.

The alignment pin 152 is used to attach the turbocharger 106, 108 to the support base 110 at the clamping platform 154. The top of the alignment pin 152 protrudes from the clamping platform 154 at the interior side of the recess 150. The top of the alignment pin 152 is configured to limit the horizontal movement of the turbocharger flange 120 but allows for thermal expansion horizontally across the assembly 100.

The mounting assembly 100 facilitates a stable, rigid mounting of the turbochargers 106, 108 to the support base 110 to reduce noise, vibration and harshness to the vehicle and operator, while also accommodating for thermal expansion, part assembly mismatch, and part tolerance stack-up. Further, the spherical bolt 122 is easily accessible.

The present invention can be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A mounting system for a turbocharger in an internal combustion engine, comprising:
a support base having a top surface configured for receiving the turbocharger;
a recessed bearing surface disposed on the turbocharger; and
at least one bridging clamp connected to the support base, wherein the bridging clamp includes a flange having at least one wing that bears down on the bearing surface of the turbocharger.

2. The mounting system of claim 1 further comprising a fastener hole disposed generally centrally in the flange, and configured to receive a spherical bolt.

3. The mounting system of claim 2 wherein the fastener hole comprises a cylindrical portion and a spherical contact portion.

4. The mounting system of claim 1 wherein the flange comprises a generally cylindrical central portion, and two wings extending from the cylindrical central portion at about 180-degrees from each other.

5. The mounting system of claim 1 further comprising at least one alignment pin disposed adjacent to the recessed bearing surface.

6. The mounting system of claim 5 wherein the at least one alignment pin is received in the support base.

7. The mounting system of claim 1 wherein the flange comprises a first wing and a second wing, wherein the first wing bears down on the bearing surface of the turbocharger, and the second wing bears down on a second bearing surface of a second turbocharger.

8. The mounting system of claim 7 wherein the turbocharger and the second turbocharger each have two bearing surfaces to receive two bridging clamps.

9. The mounting system of claim 1 wherein said recessed bearing surface is generally flat.

10. A mounting system for first and second turbochargers in an internal combustion engine, comprising:
a support base having a top surface configured for receiving the first and second turbochargers;
a bearing surface disposed on the first and the second turbocharger; and
at least one bridging clamp connected to the support base, wherein the bridging clamp includes a flange having at least one first wing that bears down on the bearing surface of the first turbocharger, and at least one second wing that bears down on the bearing surface of the second turbocharger.

11. The mounting system of claim 10 wherein the bearing surface comprises a generally flat recess in the first and the second turbocharger.

12. The mounting system of claim 10 further comprising a fastener hole disposed generally centrally in the flange, and configured to receive a spherical bolt, wherein the fastener hole comprises a cylindrical portion and a spherical contact portion.

13. The mounting system of claim 12 wherein the spherical bolt is received by the support base.

14. The mounting system of claim 10 wherein the flange comprises a generally cylindrical central portion, and two wings extending from the cylindrical central portion at about 180-degrees from each other.

15. The mounting system of claim 10 further comprising at least one alignment pin disposed adjacent to the recessed bearing surface, wherein the at least one alignment pin is received in the support base.

16. A mounting system for first and second turbochargers in an internal combustion engine, comprising:
a support base having a top surface configured for receiving the first and second turbochargers, wherein the top surface includes fastener holes configured to receive a spherical bolt;
a bearing surface disposed on the first and the second turbocharger, wherein each bearing surface is disposed on a platform that is generally parallel with the top surface of the support base; and
at least one bridging clamp connected to the support base, wherein the bridging clamp includes a flange having at least one first wing that bears down on the bearing surface of the first turbocharger, and at least one second wing that bears down on the bearing surface of the second turbocharger, wherein the flange includes a fastener hole disposed generally centrally on the flange and configured to receive the spherical bolt.

17. The mounting system of claim 16 wherein the flange comprises a generally cylindrical central portion, and two wings extending from the cylindrical central portion at about 180-degrees from each other.

18. The mounting system of claim 16 further comprising turbocharger contact surfaces disposed at a tip of each wing.
